# EUROPÄISCHE PATENTSCHRIFT

(11) **EP 3 056 877 B1**
(45) Veröffentlichungstag und Bekanntmachung des Hinweises auf die Patenterteilung: **02.12.2020**
(21) Anmeldenummer: 15155135.5
(22) Anmeldetag: 13.02.2015
(51) Int. Cl.: G01F 23/296, G01H 3/00, G01N 29/22

(54) **Vibrationsmessanordnung**
Vibration measurement assembly
Agencement de mesure de vibration

(43) Veröffentlichungstag der Anmeldung: 17.08.2016
(73) Patentinhaber: VEGA Grieshaber KG, 77709 Wolfach (DE)
(72) Erfinder: Gruhler, Holger, 78609 Tuningen (DE)
(74) Vertreter: Patentanwälte Bauer Vorberg Kayser

(56) Entgegenhaltungen:
- EP-A1- 1 434 039
- DE-A1- 10 250 065
- DE-A1-102004 018 506
- DE-A1-102005 018 397
- DE-A1-102010 039 585
- DE-B3-102009 044 922
- DE-C1- 19 651 362
- US-A1- 2006 267 784

## Beschreibung

Die vorliegende Erfindung betrifft eine Vibrationsmessanordnung gemäß dem Oberbegriff des Patentanspruchs 1.

Aus dem Stand der Technik sind Vibrationsmessanordnungen, die beispielsweise als Vibrationsgrenzschalter verwendet werden, bekannt, wobei ein Vibrationssensor eine über einen Antrieb zu einer Schwingung anregbare Membran aufweist, mittels derer ein an der Membran angeordneter mechanischer Schwinger zu einer Schwingung anregbar ist. Als Antriebe kommen beispielsweise piezoelektrische oder elektromagnetische Antriebe zum Einsatz. Abhängig von einem Bedeckungszustand des mechanischen Schwingers mit einem Füllgut sowie abhängig von der Viskosität dieses Füllguts schwingt dieser mit einer charakteristischen Frequenz, die von dem Vibrationssensor detektiert werden und in ein Messsignal umgewandelt werden kann.

Bei derartigen Sensoren ist ferner bekannt, dass diese mittels einer Befestigungseinrichtung an einem Behälter befestigt und mittels einer Anordnungseinrichtung auf einem bestimmten Füllstand angeordnet werden. So ist es beispielsweise möglich, den Vibrationssensor einer derartigen Vibrationsmessanordnung an einer als Rohr ausgebildeten Anordnungseinrichtung beispielsweise 50 cm von einer Gehäusewandung entfernt in dem Behälter anzuordnen.

Bei den aus dem Stand der Technik bekannten Vibrationsmessanordnungen der vorgenannten Art wird es als Nachteil empfunden, dass auf den Behälter wirkende Schwingungen, beispielsweise von Pumpen oder Motoren über die Befestigungseinrichtung und die Anordnungseinrichtung auch auf den Vibrationssensor wirken und die Vibrationsmessanordnung so zu einer Schwingung anregen können. Unter bestimmten Umständen können solche Störschwingungen in einer Frequenz auftreten, die zu einer Fehldetektion des Vibrationssensors führt.

Aus dem Stand der Technik ist es daher bekannt, in vibrationsgefährdeten Umgebungen die Vibrationsmessanordnung im Bereich der Befestigungseinrichtung von dem Behälter zu entkoppeln, sodass auf den Behälter wirkende Schwingungen nicht oder nur reduziert auf die Vibrationsmessanordnung übertragen werden. Ein derartiges Vorgehen ist aber auf Grund der hohen Anwendungstemperaturen, bei denen derartige Vibrationsmessanordnungen teilweise zum Einsatz kommen, nur bedingt möglich. Alternativ kann ein Schwingen der Vibrationsmessanordnung durch Verstrebungen und/oder Abspannungen innerhalb des Behälters, mittels derer die Anordnungseinrichtung fixiert wird, verhindert werden. Dieses Vorgehen ist jedoch sehr aufwendig und bedarf außerdem zusätzliche Einbauten innerhalb des Behälters, sodass es auch als nachteilig empfunden wird.

Weiterer Stand der Technik ist aus der US 2006/267784 A1 sowie der DE 102 50 065 A1 und der DE 196 51 362 kannt.

Es ist die Aufgabe der vorliegenden Erfindung eine Vibrationsmessanordnung gemäß dem Stand der Technik derart weiterzubilden, dass sie die vorgenannten Nachteile überwindet. Ferner ist es eine Aufgabe der vorliegenden Erfindung, eine Kompensationsvorrichtung für eine Vibrationsmessanordnung sowie ein Verfahren zum Abstimmen einer solchen Kompensationsvorrichtung anzugeben.

Die vorstehenden Aufgaben werden durch eine Vibrationsmessanordnung mit den Merkmalen des Patentanspruchs 1 sowie ein Verfahren zum Abstimmen einer Kompensationsvorrichtung mit den Merkmalen des Patentanspruchs 12 gelöst. Vorteilhafte Weiterbildungen sind in den abhängigen Patentansprüchen angegeben.

Eine erfindungsgemäße Vibrationsmessanordnung mit einem an einer Anordnungseinrichtung angeordneten Vibrationssensor mit einem über einen Antrieb zu einer Messschwingung anregbaren Schwingelement, bei der die Messanordnung mittels einer Befestigungseinrichtung an einem Behälter anordenbar ist, zeichnet sich dadurch aus, dass die Vibrationsmessanordnung eine Kompensationsvorrichtung für Störschwingungen aufweist. Durch eine solche an der Vibrationsmessanordnung angeordnete Kompensationsvorrichtung können Störschwingungen, die beispielsweise von einem Behälter auf die Vibrationsmessanordnung übertragen werden, deutlich reduziert und damit möglicherweise dadurch ausgelöste Fehldetektionen vermieden werden.

Insbesondere, wenn die Anordnungseinrichtung als Befestigungsrohr oder als Befestigungsstab ausgebildet ist, können sich Schwingungen, die im Bereich der Befestigungseinrichtung von dem Behälter auf die Vibrationsmessanordnung übertragen werden, gut fortpflanzen und weisen insbesondere am Ende der Anordnungseinrichtung eine vergleichsweise hohe Amplitude auf, sodass bei einer derartigen Ausgestaltung der Vibrationsmessanordnung der Einsatz einer Kompensationsvorrichtung besonders vorteilhaft ist.

Erfindungsgemäß weist die Kompensationsvorrichtung eine schwingfähig angeordnete Kompensationsmasse auf. Durch eine schwingfähig angeordnete Kompensationsmasse, die erfindungsgemäß über wenigstens ein Federelement gelagert ist, können bei geeigneter Abstimmung von Kompensationsmasse und Federelement ohne zusätzliche Elemente Schwingungen der Anordnungseinrichtung kompensiert oder wenigstens deutlich gedämpft werden. Der vorliegenden Erfindung liegt damit die Erkenntnis zu Grunde, dass eine schwingfähig angeordnete Kompensationsmasse bei einer geeigneten Abstimmung der Kompensationsmasse und der schwingfähigen Lagerung Schwingungen ausführen kann, die einer extern angeregten Störschwingung entgegenwirken, sodass eine deutliche Amplitudenreduktion der Störschwingung erreicht werden kann. Durch diese Kopplung der Störschwingung mit der Kompensationsschwingung wird der Störschwingung effektiv Schwingungsenergie entzogen.

Eine einfache Ausgestaltung des Federelements kann erreicht werden, wenn dieses als Federstab ausgebildet ist, wobei der Federstab einenends mit dem Vibrationssensor oder der Anordnungseinrichtung und anderenends mit der Kompensationsmasse verbunden ist. Dadurch, dass der Federstab unmittelbar an dem Vibrationssensor angreift und an seinem anderen Ende die Kompensationsmasse trägt, wird eine Kompensation von Störschwingungen möglichst nah an einem freien Ende der Anordnungseinrichtung der Vibrationsmessanordnung erreicht, sodass durch die Kompensationsanordnung ausgeführte Gegenschwingungen möglichst effektiv angreifen. Alternativ kann die Kompensationsmasse auch über radial angeordnete Federn in dem Rohr gelagert sein.

Die so angeordnete Kompensationsmasse schwingt in ihrer Eigenfrequenz, die auf die Störfrequenz abzustimmen ist.

Eine erfindungsgemäße Abstimmung der Eigenfrequenz oder Resonanzfrequenz einer so ausgebildeten Kompensationsvorrichtung kann erfolgen, wenn eine Federkonstante des Federelements und/oder eine Masse der Kompensationsmasse
und/oder eine Lage eines Schwerpunkts der Kompensationsmasse einstellbar ist.

Eine stabförmige, d. h. rotationssymmetrische Ausgestaltung des Federelements ermöglicht außerdem eine Kompensation von Schwingungen in sämtliche relevanten Richtungen senkrecht zur Längsachse der Anordnungseinrichtung.

Beispielsweise kann eine Lage des Schwerpunkts der Kompensationsmasse besonders einfach dadurch verändert werden, dass die Kompensationsmasse aus wenigstens zwei in Längsrichtung der Anordnungseinrichtung relativ zueinander verstellbaren Teilmassen besteht. Dies ist beispielsweise dadurch besonders einfach realisierbar, dass wenigstens eine der zwei Teilmassen wenigstens teilweise mit einem Hohlraum ausgebildet und eine zweite Teilmasse verstellbar in diesem Hohlraum angeordnet ist. So kann beispielsweise eine erste Teilmasse an dem Federelement angeordnet sein und eine zweite Teilmasse als sogenannte Madenschraube in einem Innengewinde der ersten Teilmasse entlang deren Längsachse anordenbar sein.

Zusätzlich oder alternativ kann die Kompensationsmasse an dem Federelement in Längsrichtung der Anordnungseinrichtung verstellbar angeordnet sein. Dies kann einfach dadurch realisiert werden, dass die Kompensationsmasse mittels einer Schraubverbindung an dem Federelement angeordnet ist, wobei beispielsweise das Federelement ein Außengewinde und die Kompensationsmasse ein dazu korrespondierendes Innengewinde aufweisen kann.

Die Kompensationsmasse und die Federeinrichtung sind vorzugsweise derart auf die Anordnungseinrichtung abgestimmt, beispielsweise auf eine Eigenfrequenz der Anordnungseinrichtung, die maßgeblich von deren Länge, dem verwendeten Material und der Masse des Vibrationssensors abhängt, dass eine maximale Amplitude der Störschwingung wenigstens um ¼ reduziert wird.

Um die Wirkung der Kompensationsvorrichtung breitbandiger zu gestalten, d. h. um Störschwingungen im einem breiteren Frequenzband kompensieren zu können, kann die Kompensationsvorrichtung zusätzlich ein Dämpfungsglied zur Dämpfung der Schwingung der Kompensationsmasse aufweisen.

Eine besonders platzsparende Anordnung der Kompensationsvorrichtung kann erreicht werden, wenn diese innerhalb der Anordnungseinrichtung angeordnet ist.

In einer Weiterbildung weist die Kompensationsvorrichtung einen Sensor zur Erfassung der Störschwingung und einen Aktor zur Abstimmung der Kompensationsvorrichtung auf die Störschwingung auf. Durch eine derartige Ausgestaltung der Kompensationsvorrichtung kann die Frequenz der Störschwingung erfasst und die Kompensationsvorrichtung hierauf abgestimmt werden. Dies kann beispielsweise durch Verstellen einer Länge des Federelements mittels eines Aktors erreicht werden.

In einer besonders geschickten Ausführungsform wird der Vibrationssensor zur Erfassung der Störschwingung verwendet. Auf diese Weise kann die Notwendigkeit eines zusätzlichen Sensors zur Erfassung der Störschwingung vermieden werden.

Ein Verfahren zum automatisierten Abstimmen einer Kompensationsvorrichtung sieht folgende Schritte vor:
- Erfassen einer Störschwingung,
- Abstimmen der Kompensationsvorrichtung hinsichtlich ihrer Resonanzfrequenz auf die Frequenz der erfassten Störschwingung durch Anpassen der Federkonstante der Federeinrichtung und/oder des Masseschwerpunktes der Kompensationsmasse.

Eine Kompensationseinrichtung für eine Vibrationsmessanordnung zeichnet sich durch eine schwingfähig angeordnete Kompensationsmasse aus, die vorzugsweise über wenigstens ein Federelement und derart abstimmbar gelagert ist, dass eine Resonanzfrequenz der Kompensationseinrichtung auf eine Störfrequenz der Störschwingung einstellbar ist.

Die vorliegende Erfindung wird nachfolgend anhand eines Ausführungsbeispiels unter Bezugnahme auf die beigefügten Figuren eingehend erläutert. Es zeigen:
- Fig. 1: einen Längsschnitt durch ein Ausführungsbeispiel einer Vibrationsmessanordnung mit einer Kompensationsvorrichtung,
- Fig. 2: den Vibrationssensor mit daran angeordneter Kompensationsvorrichtung auf Figur 1 in einer perspektivischen Darstellung,
- Fig. 3: einen Amplitudenverlauf der Störschwingung ohne (Kennlinie I) und mit (Kennlinie II) Kompensationsvorrichtung aus den Figuren 1 und 2 und
- Fig. 4: einen Behälterausschnitt mit an dem Behälter angeordneter Vibrationsmessanordnung.

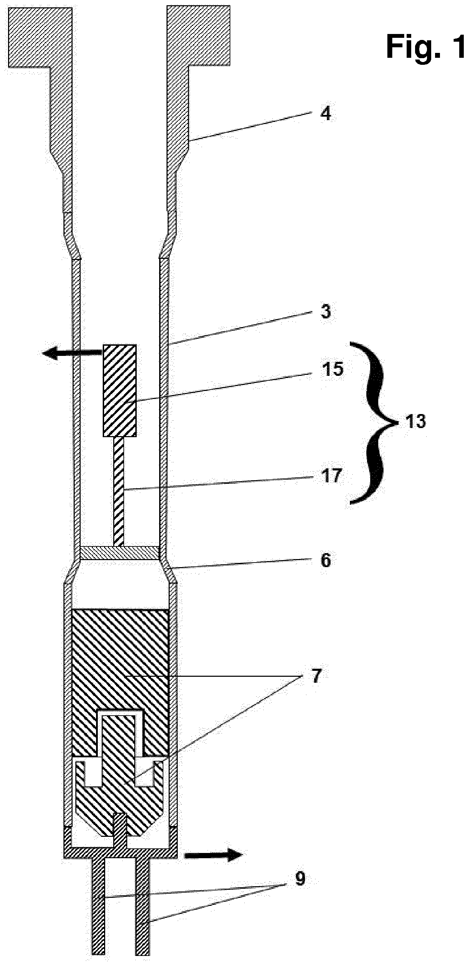

Figur 1 zeigt einen Längsschnitt durch eine Vibrationsmessanordnung 1 gemäß der vorliegenden Anmeldung.

Die Vibrationsmessanordnung 1 ist im Wesentlichen aus einem vorderseitig an einer Anordnungseinrichtung 3 angeordneten Vibrationssensor 5 sowie einer rückseitig an der Anordnungseinrichtung 3 sitzenden Befestigungseinrichtung 4 aufgebaut.

Mittels der Befestigungseinrichtung 4, die vorliegend als ein Einschraubstutzen ausgebildet ist, kann die Vibrationsmessanordnung 1 in einen vorliegend nicht dargestellten Behälter 11 eingeschraubt und der Vibrationssensor 5 somit in dem Behälter 11 platziert werden. Die Anordnungseinrichtung 3 ist im vorliegenden Ausführungsbeispiel als Rohr ausgebildet, welches rückseitig mit dem Einschraubstutzen 4 und vorderseitig mit dem Vibrationssensor 5 verbunden ist. Der Vibrationssensor 5 weist im vorliegenden Ausführungsbeispiel einen Antrieb 7 auf, mittels dem eine Membran 8 in Schwingung versetzbar ist, sodass außenseitig an der Membran 8 angeordnete Schwingelemente 9 ebenfalls in Schwingung versetzbar sind. Rückseitig zu dem Antrieb 7 ist im vorliegenden Ausführungsbeispiel ein Gehäuse angeordnet, in dem die Spule des elektromagnetischen Antriebes angeordnet ist.

An einem Übergang von dem Vibrationssensors 5 zu dem Rohr 3 ist eine Kompensationsvorrichtung 13 befestigt. Die Kompensationsvorrichtung 13 besteht im vorliegenden Ausführungsbeispiel aus einer an einem Federelement 17 angeordneten Kompensationsmasse 15, die sich von dem Übergang 6 ausgehend in das Rohr 3 erstreckt.

Wird nunmehr die Vibrationsmessanordnung 1 auf Grund einer von dem Behälter 11 ausgehenden Vibration über die Befestigungseinrichtung 4 mit einer Störschwingung beaufschlagt, so regt diese das Rohr 3 zu Schwingungen an, die die Funktion des Vibrationssensors 5 beeinträchtigen können. Durch die langgestreckte Ausbildung der Vibrationsmessanordnung 1 beginnt das Rohr 3 mit dem daran angeordneten Vibrationssensor 5 zu schwingen. Durch die schwingungsfähige Anordnung und die Art der Ankopplung der Kompensationsmasse 15 innerhalb des Rohrs 3 kann diese, wenn beispielsweise - wie in Figur 1 eingezeichnet - der Vibrationssensor 5 eine Auslenkung nach rechts erfährt, eine Gegenbewegung nach links ausführen und umgekehrt. Dieses Verhalten führt wenn die Kompensationsmasse 15 sowie das Federelement 17 geeignet auf das Rohr 3 abgestimmt sind zu einer Kompensation oder zumindest zu einer deutlichen Verringerung einer Schwingungsamplitude im Bereich des Vibrationssensors 5.

Eine Abstimmung der Kompensationseinrichtung 13 kann im vorliegenden Ausführungsbeispiel durch eine Veränderung der Steifigkeit des Federelements 17, beispielsweise durch eine Modifikation der Länge, des Durchmessers oder des Materials des Federelements 17 erfolgen. Eine Feinabstimmung der Kompensationsvorrichtung kann beispielsweise durch eine Veränderung des Masseschwerpunkts der Kompensationsmasse 15 und damit von deren Eigen- bzw. Resonanzfrequenz fᵣ beispielsweise durch eine in der Kompensationsmasse 15 angeordnete Madenschraube, die zur Einstellung in ihrer Position in Längsrichtung L des Rohrs 3 verändert wird, erfolgen.

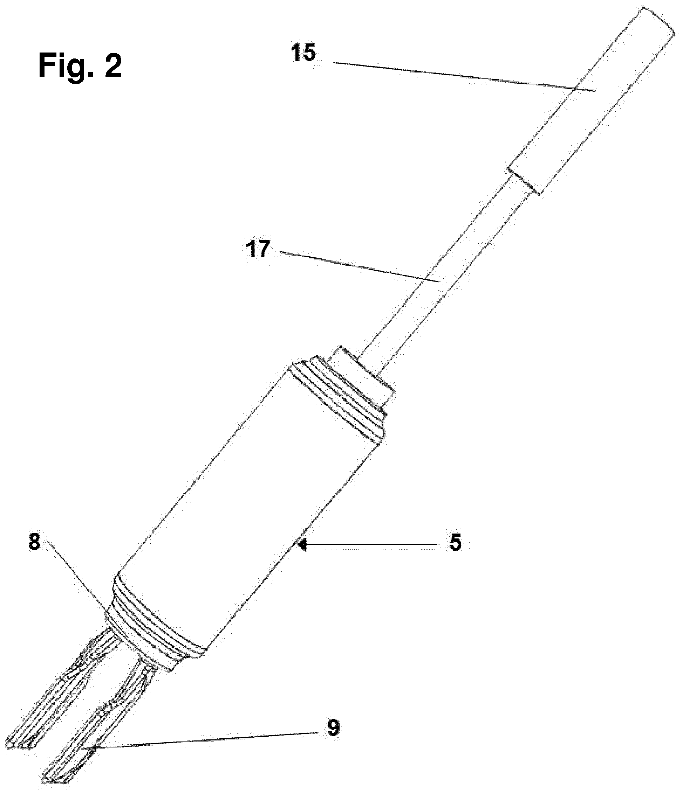

Figur 2 zeigt eine perspektivische Darstellung des Vibrationssensors 5 mit daran angeordneter Kompensationsvorrichtung 13, wie sie in Figur 1 zum Einsatz kommen. In der in Figur 2 abgebildeten Darstellung ist besonders deutlich die rotationssymmetrische Ausgestaltung des Federelements 17, das vorliegend als Federstange ausgebildet ist, sowie der daran angeordneten Kompensationsmasse 15 zu erkennen.

Ferner ist aus Figur 2 deutlich die Anordnung der mechanischen Schwingelemente 9 an der Membran 8 des Vibrationssensors 5, der vorliegend mit geschlossenem Gehäuse dargestellt ist, zu erkennen.

In Figur 3 sind zwei Kennlinien einer Vibrationsmessanordnung 1 ohne (Kennlinie I) und mit (Kennlinie II) Kompensationsvorrichtung 13 dargestellt. Wie aus Figur 3 hervorgeht, kann eine am Vibrationssensor 5 gemessene Maximalamplitude des Störsignals A_{Smax} durch eine erfindungsgemäße Kompensationsvorrichtung auf zwei Amplitudenmaxima, die unter 50% der Maximalamplitude Aₛₘₐₓ betragen, reduziert werden.

Im vorliegenden Ausführungsbeispiel liegt die Maximalamplitude ohne Kompensationsvorrichtung 13 bei einer Störfrequenz fₛ von etwa 212 Hz, wobei durch den Einsatz der Kompensationsvorrichtung 13 die reduzierten Amplitudenmaxima bei 208 Hz und 215 Hz mit einer Amplitude von etwa 40% der Maximalamplitude A_{Smax} liegen.

In Figur 4 ist die Anordnung einer Vibrationsmessanordnung 1 in einem Behälter 11 gezeigt. In dem in Figur 4 dargestellten Ausführungsbeispiel ist die Vibrationsmessanordnung 1 mit einer als Flansch ausgestalteten Befestigungseinrichtung 4 an dem Behälter 11 befestigt. Der Vibrationssensor 5 ist in diesem Ausführungsbeispiel ebenfalls über ein Rohr 3 in dem Behälter 11 angeordnet. Außerhalb des Behälters 11 sitzt hinter dem Flansch eine Messelektronik 20, in der beispielsweise eine Signalverarbeitung stattfinden kann.

In einer weiteren Ausführungsform der vorliegenden Erfindung kann eine entsprechende Kompensationsvorrichtung 13 auch derart ausgestaltet sein, dass sie außenseitig an ein Rohr 3, wie es in Figur 4 dargestellt ist, angebracht werden kann. Auf diese Weise könnten Bestandsysteme nachträglich mit einer Kompensationsvorrichtung 13 nachgerüstet und damit kompensierende Gegenschwingungen erzeugt werden.

### Bezugszeichenliste

- 1: Vibrationsanordnung

- 3: Anordnungseinrichtung/Rohr
- 4: Befestigungseinrichtung/Flansch/Einschraubstutzen
- 5: Vibrationssensor
- 6: Übergang
- 7: Antrieb
- 8: Membran
- 9: Schwingelement

- 11: Behälter

- 13: Kompensationsvorrichtung

- 15: Kompensationsmasse

- 17: Federelement

- 20: Elektronikgehäuse

- L: Längsrichtung

- Aₛ: Amplitude der Störschwingung
- fᵣₑₛ: Resonanzfrequenz
- fₛ: Störfrequenz
- I: erste Kennlinie
- II: zweite Kennlinie

## Patentansprüche

1. Vibrationsmessanordnung (1) mit
einem an einer Anordnungseinrichtung (3) angeordneten Vibrationssensor (5) mit einem über einen Antrieb (7) zu einer Messschwingung anregbaren Schwingelement (9), wobei die Messanordnung (1) mittels einer Befestigungseinrichtung (4) an einem Behälter (11) anordenbar ist, wobei die Vibrationsmessanordnung (1) eine Kompensationsvorrichtung (13) für Störschwingungen aufweist,
**dadurch gekennzeichnet, dass**
die Kompensationsvorrichtung (13) eine schwingfähig angeordnete Kompensationsmasse (15) aufweist und über wenigstens ein Federelement (17) gelagert ist, wobei die Kompensationseinrichtung dazu eingerichtet ist, dass eine Federkonstante des Federelements (17) und/oder eine Masse der Kompensationsmasse (15) und/oder eine Lage eines Schwerpunktes der Kompensationsmasse (15) einstellbar ist, so dass eine Resonanzfrequenz fᵣₑₛ der Kompensationseinrichtung (13) auf eine Störfrequenz einer Störschwingung fₛ einstellbar ist.

2. Messanordnung (1) gemäß Anspruch 1,
**dadurch gekennzeichnet, dass**
die Anordnungseinrichtung (3) als Befestigungsrohr oder als Befestigungsstab ausgebildet ist.

3. Messanordnung(1) gemäß Anspruch 1 oder 2,
**dadurch gekennzeichnet, dass**
das Federelement (17) als Federstab ausgebildet ist, der einenends mit dem Vibrationssensor (5) oder der Anordnungseinrichtung (3) und anderenends mit der Kompensationsmasse (15) verbunden ist.

4. Messanordnung (1) nach Anspruch 3,
**dadurch gekennzeichnet, dass**
die Kompensationsmasse(15) aus wenigstens zwei in Längsrichtung (L) der Anordnungseinrichtung (3) relativ zueinander verstellbaren Teilmassen besteht.

5. Messanordnung (1) gemäß Anspruch 4,
**dadurch gekennzeichnet, dass** wenigstens eine der wenigstens zwei Teilmassen (15) wenigstens teilweise mit einem Hohlraum ausgebildet und eine zweite Teilmasse verstellbar in diesem Hohlraum angeordnet ist.

6. Messanordnung (1) gemäß einem der vorhergehenden Ansprüche,
**dadurch gekennzeichnet, dass**
die Kompensationsmasse (15) an dem Federelement (17) in Längsrichtung (L) der Anordnungseinrichtung (3) verstellbar angeordnet ist.

7. Messordnung (1) gemäß einem der vorhergehenden Ansprüche,
**dadurch gekennzeichnet, dass**
die Kompensationsmasse (15) und das Federelement (17) derart auf die Anordnungseinrichtung (3) abgestimmt sind, dass eine maximale Amplitude A_{Smax} der Störschwingung wenigstens um 1/4 reduziert wird.

8. Messanordnung (1) gemäß einem der vorhergehenden Ansprüche,
**dadurch gekennzeichnet, dass**
die Kompensationsvorrichtung (13) ein Dämpfungsglied zur Dämpfung der Schwingung der Kompensationsmasse (15) aufweist.

9. Messanordnung (1) gemäß einem der vorhergehenden Ansprüche,
**dadurch gekennzeichnet, dass**
die Kompensationsvorrichtung (13) innerhalb der Anordnungseinrichtung (3) angeordnet ist.

10. Messanordnung (1) gemäß einem der vorhergehenden Ansprüche,
**dadurch gekennzeichnet, dass**
die Kompensationsvorrichtung (13) einen Sensor zur Erfassung der Störschwingungen und einen Aktor zur Abstimmung der Kompensationsvorrichtung (13) auf die Störschwingung aufweist.

11. Messanordnung (1) gemäß Anspruch 10,
**dadurch gekennzeichnet, dass**
der Vibrationssensor (5) zur Erfassung der Störschwingungen verwendet wird.

12. Verfahren zum Abstimmen einer Kompensationsvorrichtung (13) einer Messanordnung (1) gemäß Anspruch 11, mit folgenden Schritten:
- Erfassen einer Störschwingung und
- Abstimmen der Kompensationsvorrichtung (13) hinsichtlich ihrer Resonanzfrequenz fᵣₑₛ auf die Frequenz der erfassten Störschwingung fₛ, durch anpassen der Federkonstante der Federeinrichtung und/oder des Masseschwerpunkts der Kompensationsmasse (15).

## Claims

1. A vibration measuring assembly (1), comprising
a vibration sensor (5), which is arranged on an arranging device (3), with an oscillation member (9) that can be excited by means of a drive unit (7) to carry out a measurement oscillation, wherein the measuring assembly (1) can be arranged on a container (11) by means of a fastening device (4), wherein the vibration measuring assembly (1) has a compensation device (13) for interfering oscillations,
**characterized in that**
the compensation device (13) has a compensation mass (15) arranged in a manner capable of oscillation and is supported by at least one spring member (17), wherein the compensation device is configured so that a spring constant of the spring member (17) and/or a mass of the compensation mass (15) and/or a position of a center of gravity of the compensation mass (15) can be set, so that a resonance frequency fᵣₑₛ of the compensation device (13) can be set to an interfering frequency of an interfering oscillation f_{S}.

2. The measuring assembly (1) according to claim 1,
**characterized in that**
the arranging device (3) is configured as a fastening tube or fastening rod.

3. The measuring assembly (1) according to claim 1 or 2,
**characterized in that**
the spring member (17) is configured as a spring rod, which is connected on one end to the vibration sensor (5) or the arranging device (3) and on the other end to the compensation mass (15).

4. The measuring assembly (1) according to claim 3,
**characterized in that**
the compensation mass (15) consists of at least two partial masses that can be displaced relative to one another in the longitudinal direction (L) of the arranging device (3).

5. The measuring assembly (1) according to claim 4,
**characterized in that**
at least one of the at least two partial masses (15) is at least partially configured with a cavity, and a second partial mass is displaceably disposed within this cavity.

6. The measuring assembly (1) according to any one of the preceding claims,
**characterized in that**
the compensation mass (15) is arranged on the spring member (17) so as to be displaceable in the longitudinal direction (L) of the arranging device (3).

7. The measuring device (1) according to any one of the preceding claims,
**characterized in that**
the compensation mass (15) and the spring member (17) are tuned to the arranging device (3) in such a way that a maximum amplitude A_{Smax} of the interfering oscillation is reduced by at least 1/4.

8. The measuring assembly (1) according to any one of the preceding claims,
**characterized in that**
the compensation device (13) has a damping member for damping the oscillation of the compensation mass (15).

9. The measuring assembly (1) according to any one of the preceding claims,
**characterized in that**
the compensation device (13) is disposed within the arranging device (3).

10. The measuring assembly (1) according to any one of the preceding claims,
**characterized in that**
the compensation device (13) has a sensor for detecting the interfering oscillations and an actuator for tuning the compensation device (13) to the interfering oscillations.

11. The measuring assembly (1) according to claim 10,
**characterized in that**
the vibration sensor (5) is used for detecting the interfering oscillations.

12. A method for tuning a compensation device (13) of a measuring assembly (1) according to claim 11, comprising the following steps:
- detecting an interfering oscillation, and
- tuning the compensation device (13), with respect to its resonance frequency fᵣₑₛ, to the frequency of the detected interfering oscillation f_{S} by adjusting the spring constant of the spring device and/or the center of gravity of the compensation mass (15).

## Revendications

1. Ensemble de mesure de vibrations (1) comprenant un capteur de vibrations (5) disposé sur un dispositif d'agencement (3) et ayant un élément vibrant (9) apte à être excité par un entraînement (7) à une oscillation de mesure, dans lequel ledit ensemble de mesure (1) peut être disposé sur un récipient (11) au moyen d'un dispositif de fixation (4), dans lequel ledit ensemble de mesure de vibrations (1) présente un dispositif de compensation (13) pour des vibrations parasites, **caractérisé par le fait que** le dispositif de compensation (13) comprend une masse de compensation (15) qui est agencée de manière à pouvoir osciller et est supporté par le biais d'au moins un élément formant ressort (17), dans lequel le dispositif de compensation est agencé de manière à pouvoir régler une , constante de ressort de l'élément formant ressort (17) et/ou une masse de la masse de compensation (15) et/ou une position d'un centre de gravité de la masse de compensation (15) de sorte qu'une fréquence de résonance fᵣₑₛ du dispositif de compensation (13) peut être ajustée à une fréquence parasite d'une oscillation parasite fₛ.

2. Ensemble de mesure (1) selon la revendication 1, **caractérisé par le fait que** le dispositif d'agencement (3) est réalisé en tant que tube de fixation ou en tant que tige de fixation.

3. Ensemble de mesure (1) selon la revendication 1 ou 2, **caractérisé par le fait que** l'élément formant ressort (17) est réalisé sous la forme d'une tige-ressort qui, à une extrémité, est reliée au capteur de vibrations (5) ou au dispositif d'agencement (3) et, à l'autre extrémité, à la masse de compensation (15).

4. Ensemble de mesure (1) selon la revendication 3, **caractérisé par le fait que** la masse de compensation (15) est constituée d'au moins deux masses partielles réglables l'une par rapport à l'autre dans la direction longitudinale (L) du dispositif d'agencement (3).

5. Ensemble de mesure (1) selon la revendication 4, **caractérisé par le fait que** l'une au moins desdites au moins deux masses partielles (15) est réalisée, au moins en partie, de manière à avoir une cavité et qu'une deuxième masse partielle est disposée de manière réglable dans cette cavité.

6. Ensemble de mesure (1) selon l'une quelconque des revendications précédentes, **caractérisé par le fait que** la masse de compensation (15) est disposée sur l'élément formant ressort (17) de manière à pouvoir être réglée dans la direction longitudinale (L) du dispositif d'agencement (3).

7. Ensemble de mesure (1) selon l'une quelconque des revendications précédentes, **caractérisé par le fait que** la masse de compensation (15) et l'élément formant ressort (17) sont accordés au dispositif d'agencement (3) de telle sorte qu'une amplitude maximale Aₛₘₐₓ de l'oscillation parasite est réduite d'au moins 1/4.

8. Ensemble de mesure (1) selon l'une quelconque des revendications précédentes, **caractérisé par le fait que** le dispositif de compensation (13) comprend un élément amortisseur destiné à amortir l'oscillation de la masse de compensation (15).

9. Ensemble de mesure (1) selon l'une quelconque des revendications précédentes, **caractérisé par le fait que** le dispositif de compensation (13) est disposé à l'intérieur du dispositif d'agencement (3).

10. Ensemble de mesure (1) selon l'une quelconque des revendications précédentes, **caractérisé par le fait que** le dispositif de compensation (13) comprend un capteur destiné à détecter les vibrations parasites ainsi qu'un actionneur destiné à accorder le dispositif de compensation (13) à la vibration parasite.

11. Ensemble de mesure (1) selon la revendication 10, **caractérisé par le fait que** le capteur de vibrations (5) est utilisé pour détecter les vibrations parasites.

12. Procédé pour accorder un dispositif de compensation (13) d'un ensemble de mesure (1) selon la revendication 11, comprenant les étapes suivantes consistant à:
- détecter une oscillation parasite et
- accorder le dispositif de compensation (13) quant à sa fréquence de résonance fᵣₑₛ à la fréquence de l'oscillation parasite fₛ détectée, en adaptant la constante de ressort du dispositif formant ressort et/ou du centre de gravité de masse de la masse de compensation (15).
